# EUROPÄISCHE PATENTSCHRIFT

(11) **EP 0 718 446 B1**
(45) Veröffentlichungstag und Bekanntmachung des Hinweises auf die Patenterteilung: **15.04.1998**
(21) Anmeldenummer: 95118480.3
(22) Anmeldetag: 23.11.1995
(51) Int. Cl.: E03F 5/06, E02D 29/14

(54) **Entwässerungsrinne mit einem ein im wesentlichen U-förmiges Profil aufweisenden Rinnenkörper**
Drainage channel with a channel body having a substantially U-shaped profile
Caniveau d'écoulement avec un corps ayant un profilé essentiellement en forme de "U"

(30) Priorität: 22.12.1994 DE 4446105; 14.02.1995 DE 19504869
(43) Veröffentlichungstag der Anmeldung: 26.06.1996
(73) Patentinhaber: ACO SEVERIN AHLMANN GMBH & CO. KG, D-24768 Rendsburg (DE)
(72) Erfinder: Arm, Wolfgang, Dipl.-Ing., D-24768 Rendsburg (DE); Hinrichs, Susanne, D-25795 Weddingstedt (DE); Rinckens, Manfred, D-25479 Ellerau (DE)
(74) Vertreter: Bohnenberger, Johannes, Dr.

(56) Entgegenhaltungen:
- CH-A- 681 313
- DE-U- 8 810 154

## Beschreibung

Die Erfindung betrifft eine Entwässerungsrinne mit einem ein im wesentlichen U-förmiges Profil aufweisenden Rinnenkörper, einen am Rinnenkörper befestigbaren Abdeckrost mit in den Rinnenkörper hineinragenden Arretierungsbügeln mit einwärts abgewinkelten Schenkeln sowie in den Seitenwänden des Rinnenkörper im wesentlichen gegenüberliegend angeordneten Aussparungen.

Aus dem deutschen Gebrauchsmuster G 88 10 154.1 ist ein Abdeckrost für eine Entwässerungsrinne mit Klemmhalterung vorbekannt, wobei mindestens zwei am Abdeckrost angeordnete Klemmbügel vorhanden sind. Mittels der Klemmbügel können die Abdeckroste in den Rinnenkörper hineingeschoben und durch versetzt angeordnete lose Klemmteile federnd arretiert werden. Zusätzlich können an den vertikalen Längskanten der Entwässerungsrinne Ausnehmungen vorgesehen sein, mit denen eine Klemmfeder zusammenwirkt, wodurch die Rastverbindung verbessert wird.

Bei der Entwässerungsrinne gemäß der schweizer Patentschrift CH 681 313 A5 weist ein Abdeckrost einen Arretierungsbügel mit einem Versteifungsflansch auf, wobei der Arretierungsbügel einschließlich Versteifungsflansch durch Schrauben mit dem Abdeckrost verbunden ist.

Federnde nach unten zur Rinne reichende Schenkel des Bügels besitzen Vorsprünge oder Sicken, die beim Einsetzen des Abdeckrostes in entsprechende Ausnehmungen oder Aussparungen der Rinne einschnappen. Hierdurch soll der Abdeckrost einerseits verkehrssicher gehalten und andererseits leicht zu Reinigungszwecken entfernbar sein.

Es hat sich jedoch gezeigt, daß diese Art der Rostarretierung bei Mineralgußrinnen nicht angewandt werden kann, da die Arretierungsfedern bei häufiger Rostbetätigung die Rinnenwände und Arretierungskammern zerstören würde.

Es ist daher Aufgabe der Erfindung eine Entwässerungsrinne mit einem ein im wesentlichen U-förmiges Profil aufweisenden Rinnenkörper und einen am Rinnenkörper befestigbaren Abdeckrost vorzuschlagen, welche eine ausreichende Sicherheit gegen unbeabsichtigtes Lösen des Abdeckrostes bietet und wobei unterschiedliche Abdeckroste in einfacher Weise sicher befestigt werden können, ohne daß sich herstellungs- oder montageseitig höhere Anforderung ergeben.

Die Lösung der Aufgabe der Erfindung erfolgt mit einem Gegenstand gemäß den Merkmalen des Patentanspruches 1, wobei die Unteransprüche mindestens zweckmäßige Ausgestaltungen und Weiterbildungen umfassen.

Ein wesentlicher Grundgedanke der Erfindung besteht darin, eine spezielle Abdeckrostverriegelung vorzuschlagen, bei der eine blattförmig Abdeckrost-Verriegelungsfeder mit gegenüberliegend ausgebildeten Auskragungen in Aussparungen der Seitenwände des Rinnenkörpers eingreift.

In diesem Zustand wird die Abdeckrost-Verriegelungsfeder im wesentlichen spannungsfrei im Rinnenkörper gehalten und kann als Montage- und Transporthilfe genutzt werden.

Dadurch, daß gemäß einem weiteren Grundgedanken der Erfindung die Abdeckrost-Verriegelungsfeder mindestens zwei spiegelsymmetrisch ausgebildete, zur Innenseite des Rinnenkörpers und zu Arretierungsbügeln des Abdeckrostes hingerichtete Federschenkel umfaßt, die jeweils eine Hinterschneidung und eine Einlaufschräge aufweisen, kann der Abdeckrost mit seinen integral ausgebildeten Arretierungsbügeln, die einwärts abgewinkelte Schenkel aufweisen, leicht von oben auf den Rinnenkörper aufgesetzt und einrastend nach unten bewegt werden.

Wie bereits erwähnt besitzt der Abdeckrost vorzugsweise integral angeformte Arretierungsbügel, deren einwärts abgewinkelte Schenkel beim Einsetzen des Abdeckrostes in den Rinnenkörper hinein und unter Überwindung der Federkraft der Federschenkel der Abdeckrost-Verriegelungsfeder an der Einlaufschräge entlanggleiten sowie unter Entspannung der Federschenkel in die jeweilige Hinterschneidung einrasten.

Durch dieses Einrasten ist eine ausreichende Sicherheit gegen unerwünschtes Ausheben oder Lösen des Abdeckrostes gegeben, wobei durch die Federkraft der Federschenkel der Abdeckrost spielfrei im bzw. am Rinnenkörper fixiert wird.

Die erfindungsgemäße blattförmige Abdeckrost-Verriegelungsfeder besteht aus einem nicht-rostenden Federstahl, wird separat gefertigt und kann von ihrer Grundkonstruktion her bei entsprechender Anpassung an die jeweilige Entwässerungsrinnenabmaße leicht in die Aussparungen der Seitenwände der Rinnenkörper von oben eingesetzt bzw. eingedrückt werden.

Zur Verbesserung der Federeigenschaften der Abdeckrost-Verriegelungsfeder ist der zwischen den Auskragungen vorhandene Verbindungsbereich in seiner Breite verjüngt und/oder mit einer eingestanzten Längssicke versehen. Diese Längssicke erhöht darüber hinaus die Stabilität im Sinne der gewünschten Möglichkeit, als Trage- und Montagehilfe der Rinnenkörper zu dienen.

Durch die Neigung der Verriegelungsflächen am Rost und der Federschenkel zueinander kann die Verriegelungskraft und somit auch die Entriegelungskraft des Rostes eingestellt werden.

Bei entsprechender Neigung beider Flächen zueinander ist es möglich, den Rost mittels Rosthaken durch Aufbringung einer Zugkraft nach oben entfernen zu können. Werden die Verriegelungsflächen von Rost und Feder steiler zueinander gestellt, kann der Rost nur durch Wegbiegen der Federschenkel entriegelt werden.

Dazu ist es zweckmäßig, mit einem Schraubendreher durch die Einlauföffnungen des Rostes hindurchzufahren und die Federschenkel seitlich wegzubiegen, um den Rost dann kraftlos nach oben herausnehmen zu können.

Die Verriegelungsfeder wird mittels Schraubendreher dermaßen entfernt, daß der Schraubendreher auf einer Seite zwischen Rinnenwand und Federschenkel eingeführt wird und der Federschenkel aus der Verriegelungskammer der Rinnenseitenwand herausgedrückt wird.

Danach kann die Verriegelungsfeder durch koaxiale Bewegung aus der gegenüberliegenden Verriegelungskammer gezogen werden.

In einer Ausgestaltung der Erfindung besitzt die blattförmige Abdeckrost-Verriegelungsfeder im Verbindungsbereich zur Bildung von gegenüberliegenden Anschlagflächen bezogen auf die Seitenwände des Rinnenkörpers ausgehend von den Auskragungen, einen zum Rinnenboden hin gerichteten abgewinkelten Abschnitt. Mit diesem abgewinkelten Abschnitt liegt die Feder seitlich im Bereich unterhalb der Aussparungen an den Seitenwänden des Rinnenkörpers an, wodurch beim Einsetzen des Rostes einwirkende Verschiebekräfte aufgenommen und der Sitz der Verriegelungsfeder im Rinnenkörper selbst verbessert werden kann.

Vorteilhafterweise ist die Abdeckrost-Verriegelungsfeder einstückig aus einem nicht-rostenden Federstahlmaterial ausreichender Walzfestigkeit mittels Rollen, Biegen oder Abkanten als kostengünstiges Einsatzstück gefertigt.

Im Sinne der Erfindung können unterschiedlichste Abdeckroste, nämlich Steg-, Guß- oder Maschenroste, die mit entsprechenden Arretierungsbügeln mit einwärts abgewinkelten Schenkeln versehen sind, verwendet werden, ohne daß irgendwelche grundsätzlichen Änderungen an der blattförmigen Abdeckrost-Verriegelungsfeder selbst erforderlich sind. Hierdurch ist es möglich, weitgehend standardisierte Rinnenkörper und Abdeckrost-Verriegelungsfedern vorzufertigen und auf Lager zu halten und diese je nach entsprechendem Anwendungs- und Einsatzfall und in Abhängigkeit von der notwendigen Belastungsklasse mit unterschiedlichen Abdeckrosten zu komplettieren.

In einer speziellen Ausführungsform ist ein verwendeter Stegrost so ausgebildet, daß dieser jeweils längsseitig Doppelfalzflächen zur Auflage auf die Oberkante der Seitenwände des Rinnenkörpers aufweist, wobei der untere Teil des Falzes jeweils in den zur Innenseite des Rinnenkörper hingerichteten Arretierungsbügel übergeht, der an seinem jeweils unteren Ende den einwärts abgewinkelten Schenkel aufweist.

Mittels der Erfindung gelingt es demnach, eine Entwässerungsrinne mit einem ein im wesentlichen U-förmiges Profil aufweisenden Rinnenkörper anzugeben, der mit einem am Rinnenkörper befestigbaren Abdeckrost kompletiert wird, wobei die Verriegelung des Abdeckrostes im Rinnenkörper in besonders einfacher Weise ohne Schraub- oder sonstiges Werkzeug erfordernde Rastmittel möglich ist. Darüber hinaus ist der Abdeckrost am Rinnenkörper so befestigt, daß ein selbständiges Lösen verhindert wird, jedoch im Falle einer erforderlichen Abnahme des Abdeckrostes, beispielsweise zum Reinigen des Rinnenkörpers, dieses Abnehmen ohne Spezialwerkzeug vorgenommen werden kann.

Zusätzlich kann ein mit den erfindungsgemäßen Abdeckrost-Verriegelungsfedern versehener Rinnenkörper durch die Verbindungsbereiche der Federn nach Art eines Griffes transportiert und am Montageort bewegt werden, so daß sich die Handhabung beim Verlegen derartig ausgebildeter Entwässerungsrinnen leichter gestaltet.

Die Erfindung soll nachstehend anhand eines Ausführungsbeispiels und unter Zuhilfenahme von Figuren näher erläutert werden.

Hierbei zeigen:
- Fig. 1: einen Querschnitt durch einen Rinnenkörper mit Abdeckrost-Verriegelungsfedern und arretiertem Stegrost;
- Fig. 2: einen Querschnitt durch einen Rinnenkörper mit verriegelte» Gußrost;
- Fig. 3: einen Querschnitt durch einen Rinnenkörper mit verriegelte» Maschenrost und
- Fig. 4a, b: eine Drauf- bzw. Seitenansicht einer Abdeckrost-Verriegelungsfeder aus einem nicht-rostenden Federstahlmaterial.

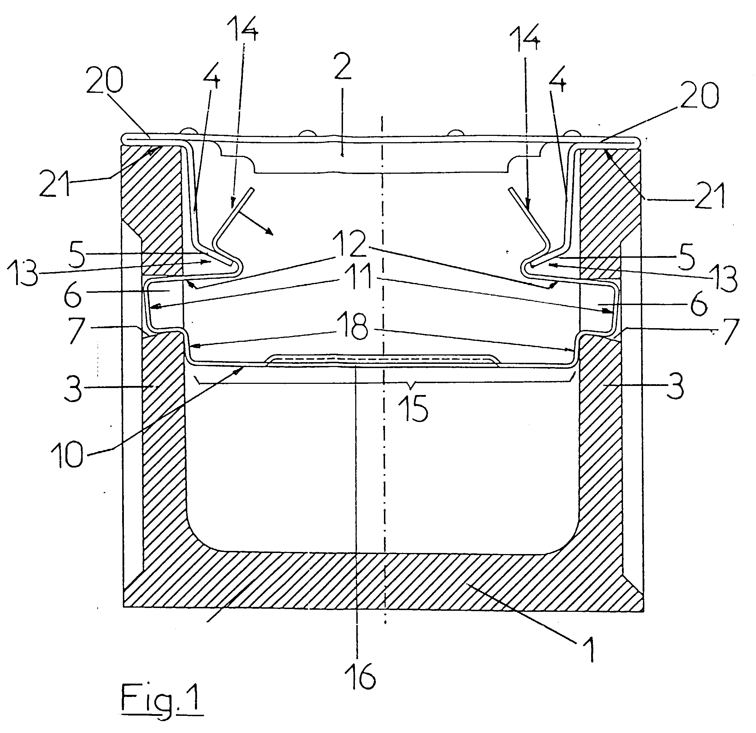

Gemäß Fig. 1 ist ein Rinnenkörper 1 mit einem Abdeckrost 2, im gezeigten Beispiel mit einem Stegrost versehen, wobei der Stegrost in den Rinnenkörper 1 hineinragende Arretierungsbügel 4 aufweist. Die Arretierungsbügel 4 weisen an ihrem unteren Ende einwärts gerichtete, abgewinkelte Schenkel 5 auf.

Beim ersten Ausführungsbeispiel wird der Stegrost einstückig ausgestanzt und durch Falzen geformt, wobei die Arretierungsbügel 4 und die abgewinkelten Schenkel 5 durch entsprechendes Abkanten ausgebildet werden.

Der Rinnenkörper 1 besitzt in seinen Seitenwänden 3 im wesentlichen gegenüberliegende Aussparungen 6 zur Aufnahme einer blattförmigen Abdeckrost-Verriegelungsfeder 10. Die blattförmige Abdeckrost-Verriegelungsfeder 10 weist seitliche, gegenüberliegend angeordnete Auskragungen 11 auf, die in die Aussparungen 6 der Seitenwände 3 des Rinnenkörpers 1 eingreifen.

Die Abdeckrost-Verriegelungsfeder 10 besitzt mindestens 2 spiegelsymmetrisch ausgebildete, zur Innenseite des Rinnenkörpers 1 und zu den Arretierungsbügeln 4 hingerichtete Federschenkel 12, die von der Innenseite der Seitenwände 3 so beabstandet sind, daß die Arretierungsbügel 4 des Abdeckrostes 2 dahintergreifen können. Die Federschenkel 12 weisen jeweils eine Hinterschneidung 13 auf, die der Aufnahme des einwärts abgewinkelten Schenkels 5 des jeweiligen Arretierungsbügels 4 dienen. Im arretierten Zustand des Abdeckrostes 2 liegt der abgewinkelte Schenkel 5 des Arretierungsbügels 4 mit seiner Oberseite an der Unterseite des Hinterschneidungsteils 13 des Federschenkels 12 möglichst großflächig an, so daß eine sichere Befestigung des Abdeckrostes gewährleistet ist.

Die Federschenkel 12 der blattförmigen Abdeckrost-Verriegelungsfeder 10 besitzen weiterhin je eine Einlaufschräge 14.

Beim Aufsetzen und Eindrücken des Abdeckrostes 2 von oben in den Rinnenkörper 1 drückt der abgewinkelte Schenkel 5 des Arretierungsbügels 4 auf die Einlaufschräge 14 des Federschenkels 12 und bewegt diesen in Pfeilrichtung so lange, bis der Bereich der Hinterschneidung 13 erreicht ist und der entsprechende Teil der Abdeckrost-Verriegelungsfeder 10 zurückschnappt, wodurch der abgewinkelte Schenkel 5 lagefixiert ist.

Durch Ausübung einer Druckkraft von oben auf die Einlaufschräge 14, zweckmäßigerweise durch eine Wassereinlauföffnung im Abdeckrost 2, kann der die Einlaufschräge 14 bildende Teil der Abdeckrost-Verriegelungsfeder 10 vom abgewinkelten Schenkel 5 des Arretierungsbügels 4 wegbewegt werden, wodurch der betreffende Arretierungsbügel 4 freiliegt und der Rost zunächst von einer Seite beginnend oder bei einer entsprechenden Krafteinwirkung von zwei Seiten gleichzeitig nach oben entnommen werden kann. Alternativ ist ein Entriegeln des Rostes durch eine nach oben gerichtete Zugkraft möglich.

Das Einsetzen und Arretieren des Abdeckrostes 2, der die erwähnten vorzugsweise integral angeformten Arretierungsbügel 4 mit einwärts abgewinkelten Schenkeln 5 aufweist, erfolgt dadurch, daß mit Druckausübung auf den Abdeckrost 2 dieser durch Gleitbewegung der abgewinkelten Schenkel 5 entlang der Einlaufschrägen 14 bis zur Entspannung der Federschenkel am Ort der Hinterschneidung 13 bewegt wird.

Die blattförmige Abdeckrost-Verriegelungsfeder 10 besitzt beim gezeigten Ausführungsbeispiel gemäß Fig. 1 in einem Teil des Verbindungsbereiches 15 eine eingestanzte Längssicke 16, einerseits zur Verbesserung der Federeigenschaften und andererseits zur Erhöhung der Stabilität dann, wenn der Verbindungsbereich 15 als Tragegriff und Montagehilfe bei der Verlegung von Rinnenkörpern 1 mit bereits eingesetzter Abdeckrost-Verriegelungsfeder 10 genutzt wird.

Die Aussparungen 6 in den Seitenwänden 3 des Rinnenkörpers 1 besitzen vorzugsweise einen annähernd rechteckigen oder quadratischen Querschnitt, wodurch die Abdeckrost-Verriegelungsfeder 10 verdrehsicher positioniert ist.

In dem Falle, wo die Aussparungen 6 als durchgehende Öffnungen in den Seitenwänden 3 des Rinnenkörpers 1 ausgeführt sind, kann von außen mit Hilfe eines Werkzeuges, z. B. Schraubendrehers, Druck auf die freiliegende Seite der Auskragungen 11 bzw. zwischen Federschenkel und Rinnenseitenwand ausgeübt werden, wodurch die Feder aus ihrem Sitz in den Seitenwänden 3 herausgedrückt, aus der gegenüberliegenden Aussparung entfernt und aus dem Rinnenkörper 1 entnommen werden kann.

Zur Gewährleistung der Federeigenschaften der Abdeckrost-Verriegelungsfeder 10 sind die Aussparungen 6 in den Seitenwänden 3 des Rinnenkörpers 1 nach außen hin konisch erweitert ausbildbar.

Bei den Ausführungsbeispielen weist der Verbindungsbereich 15 der blattförmigen Abdeckrost-Verriegelungsfeder 10 einen beidseitig vorhandenen abgewinkelten Abschnitt 18 auf, wodurch die Abdeckrost-Verriegelungsfeder 10 nicht nur an der Oberkante der jeweiligen Aussparung 6 sondern auch an einem Teil der Innenseite bzw. Innenwandung der jeweiligen Seitenwand 3 des Rinnenkörpers 1 anliegt. Hierdurch wird der Sitz der Abdeckrost-Verriegelungsfeder 10 verbessert und ein unerwünschtes Herausdrücken derselben vermieden.

Der in der Figur 1 gezeigte Abdeckrost (2) ist als Stegrost ausgebildet und weist eine Doppelfalzfläche (20) für seine jeweiligen Längsseiten auf. Die Doppelfalzfläche (20), die integral in den Arretierungsbügel (4) mit dem abgewinkelten Schenkelabschnitt (5) über, so daß der mit den erforderlichen Arretierungsbügeln (4) versehene Stegrost in einem einzigen Stanz und Biegevorgang ausgebildet werden kann, wodurch sich die Herstellungkosten für eine derartige Rost erheblich reduzieren lassen. Insbesondere sind keinerlei Schraub- oder sonstige Verbindungen zur Befestigung von Arretierungsbügel notwendig.

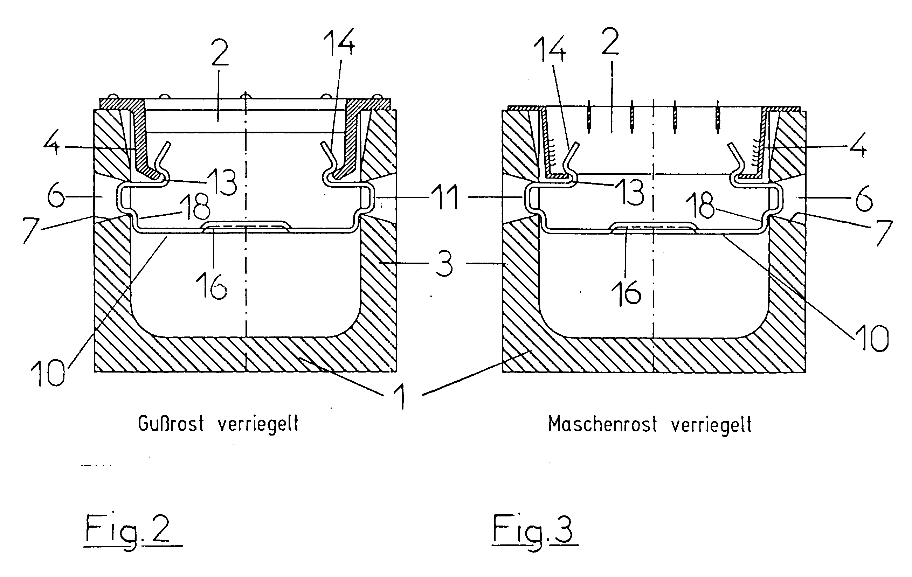

Ein zweites Ausführungsbeispiel der Erfindung gemäß Fig. 2 zeigt die Anordnung eines im Rinnenkörper 1 verriegelten Gußrostes 2. Der Gußrost 2 besitzt in seiner Wirkung adäquate Arretierungsbügel 4 mit entsprechenden abgewinkelten Schenkeln 5. Im übrigen entspricht die Ausbildung der Abdeckrost-Verriegelungsfeder 10 gemäß Fig. 2 und 3 derjenigen, wie anhand der Fig. 1 erläutert.

Fig. 3 zeigt ein drittes Ausführungsbeispiel der Entwässerungsrinne bestehend aus einem Rinnenkörper 1 und Abdeckrost 2, wobei letzterer als Maschenrost ausgebildet ist und ebenfalls Arretierungsbügel 4 und abgewinkelte Schenkel 5 aufweist. Beim dritten Ausführungsbeispiel wird einem Teil des Rostrahmens die Funktion des Arretierungsbügels 4 mit abgewinkelten Schenkeln 5 zugewiesen, so daß auch in diesem Falle ohne konstruktive Veränderungen an der Abdeckrost-Verriegelungsfeder 10 eine sichere Arretierung des Maschenrostes 2 am Rinnenkörper 1 bzw. den Seitenwänden 3 des Rinnenkörpers 1 erreicht werden kann.

Im übrigen entsprechen die in den Fig. 2 und 3 verwendeten Bezugszeichen denjenigen, welche anhand der Fig. 1 bereits erläutert wurden.

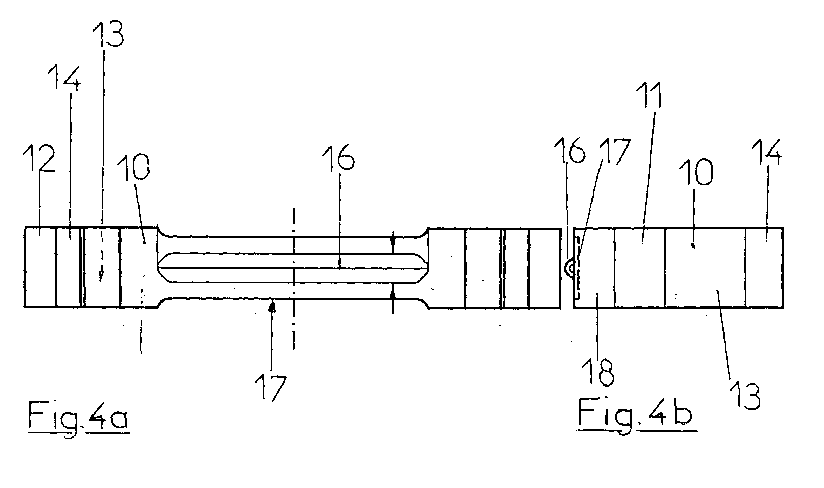

Mit Hilfe der Fig. 4a und 4b soll anhand einer Drauf- und einer Seitenansicht die bei den Ausführungsbeispielen verwendete Abdeckrost-Verriegelungsfeder 10 näher erläutert werden.

Bei der Draufsicht gemäß Fig. 4a ist eine Verjüngung 17 im Verbindungsbereich 15 der Abdeckrost-Verriegelungsfeder 10 und die Ausbildung der Längssicke 16 zu erkennen. Die Draufsicht gemäß Fig. 4a zeigt weiterhin den Federschenkel 12 mit Einlaufschräge 14 und dem Hinterschneidungsabschnitt 13.

In der Seitenansicht gemäß Fig. 4b ist die Seitenfläche der Auskragung 11 sowie der abgewinkelte Abschnitt 18 des Verbindungsbereiches 15 sowie der Hinterschneidungsabschnitt 13 der blattförmigen Abdeckrost-Verriegelungsfeder 10 zu erkennen.

Bei den Ausführungsbeispielen wird die Abdeckrost-Verriegelungsfeder 10 aus nicht-rostendem Federstahl mit einer Walzfestigkeit des Ausgangsmaterials im Bereich von 1350 bis 1500 N/mm² verwendet.

In einer figürlich nicht dargestellten weiteren Ausführungsform kann der Übergangsbereich zwischen der Hinterschneidung 13 und der Einlaufschräge 14 des Federschenkels 12 der Abdeckrost-Verriegelungsfeder 10 als Rastnase verwendet werden, die mit einer entsprechenden Aussparung im Schenkel des Arretierungsbügels 4 zusammenwirkt. Bei dieser Ausführungsform ist das Ausbilden eines einwärts abgewinkelten Schenkels 5 nicht zwingend erforderlich.

Allen gezeigten Ausführungsbeispielen ist jedoch gemeinsam, daß eine Abdeckrostverriegelung in einfacher Weise dadurch möglich wird, daß spezielle Abdeckrost-Verriegelungsfedern im Rinnenkörper eingesetzt sind und der Rost über Arretierungsbügel verfügt, mit deren Hilfe ein Einrasten und sicheres Arretieren verschiedenster Typen von Abdeckrosten ohne Verwendung von Spezialwerkzeug realisiert werden kann.

### Bezugszeichenliste

- 1: Rinnenkörper
- 2: Abdeckrost
- 3: Seitenwände des Rinnenkörpers
- 4: Arretierungsbügel
- 5: abgewinkelter Schenkel
- 6: Aussparung im Rinnenkörper
- 7: konischer Verlauf der Aussparung
- 10: blattförmige Abdeckrost-Verriegelungsfeder
- 11: Auskragung
- 12: Federschenkel
- 13: Hinterschneidung
- 14: Einlaufschräge
- 15: Verbindungsbereich der Feder 10
- 16: Längssicke
- 17: Verjüngung
- 18: abgewinkelter Abschnitt des Verbindungsbereichs
- 20: Doppelfalzfläche
- 21: Oberkante Seitenwände Rinnenkörper

## Patentansprüche

1. Entwässerungsrinne mit einem ein im wesentlichen U-förmiges Profil aufweisenden Rinnenkörper (1), einen am Rinnenkörper (1) befestigbaren Abdeckrost (2) mit in den Rinnenkörper (1) hineinragenden Arretierungsbügeln (4) mit einwärts abgewinkelten Schenkeln (5) sowie in den Seitenwänden (3) des Rinnenkörper (1) im wesentlichen gegenüberliegend angeordneten Aussparungen (6),
**gekennzeichnet durch**,
- eine blattförmige Abdeckrost-Verriegelungsfeder (10), welche mit gegenüberliegend ausgebildeten Auskragungen (11) in die Aussparungen (6) der Seitenwände (3) des Rinnenkörpers (1) eingreift und nach dem Eingreifen oder Einrasten eine im wesentlichen spannungsfreie Lage einnimmt, wobei die Abdeckrost-Verriegelungsfeder (10) mindestens zwei spiegelsymmetrisch ausgebildete, zur Innenseite des Rinnenkörpers (1) und zu den Arretierungsbügeln (4) hingerichtete Federschenkel (12) umfaßt, die jeweils eine Hinterschneidung (13) und eine Einlaufschräge (14) aufweisen;
- die Arretierungsbügel (4), die am Abdeckrost (2) vorzugsweise integral angeformt sind und daß die einwärts abgewinkelten Schenkel (5) beim Einsetzen des Abdeckrostes (2) in den Rinnenkörper (1) unter Überwindung der Federkraft der Federschenkel (12) der Abdeckrost-Verriegelungsfeder (10) an deren Einlaufschrägen (14) entlanggleiten und unter Entspannung der Federschenkel (12) in die jeweilige Hinterschneidung (13) einrasten.

2. Entwässerungsrinne nach Anspruch 1,
**dadurch gekennzeichnet,** daß
ein zwischen den Auskragungen (11) der blattförmigen Abdeckrost-Verriegelungsfeder(10) vorgesehener Verbindungsbereich (15) mindestens teilweise in seiner Breite verjüngt ist und/oder eine eingestanzte Längssicke (16) aufweist.

3. Entwässerungsrinne nach Anspruch 2,
**dadurch gekennzeichnet,** daß
der Verbindungsbereich (15) zur Bildung von gegenüberliegenden Anschlagflächen bezogen auf die Seitenwände (3) des Rinnenkörpers (1) ausgehend von den Auskragungen (11) jeweils einen zum Rinnenboden hin gerichteten abgewinkelten Abschnitt (18) aufweist.

4. Entwässerungsrinne nach einem der Ansprüche 1 bis 3,
**dadurch gekennzeichnet,** daß
die in den Seitenwänden (3) des Rinnenkörpers (1) befindlichen Aussparungen (6) durchgängig und nach außen konisch erweitert ausgebildet sind.

5. Entwässerungsrinne nach einem der Ansprüche 1 bis 4,
**dadurch gekennzeichnet,** daß
mit in den Rinnenkörper (1) eingesetzten blattförmigen Abdeckrost-Verriegelungsfedern (10) eine Trage- und Montagehilfe gegeben ist.

6. Entwässerungsrinne nach einem der Ansprüche 1 bis 4,
**dadurch gekennzeichnet,** daß
durch Druckausübung auf die Federschenkel (12) der Abdeckrost-Verriegelungsfeder (10) im wesentlichen von oben der abgewinkelte Schenkelteil (5) des jeweiligen Arretierungsbügels (4) aus der Hinterschneidung (13) heraustritt und auf diese Weise der Abdeckrost (2) nach oben entfernbar ist und/oder das durch Zugkraftausübung mittels eines Rosthakens auf den Abdeckrost (2) dieser nach oben entfernbar ist.

7. Entwässerungsrinne nach einem der vorhergehenden Patentansprüche,
**dadurch gekennzeichnet,** daß
die Abdeckrost-Verriegelungsfeder (10) einstückig ausgebildet ist und aus einem nicht-rostenden Federstahlmaterial ausreichender Walz- und Biegefestigkeit besteht.

8. Entwässerungsrinnen nach einem der vorhergehenden Ansprüche,
**dadurch gekennzeichnet,** daß
der Abdeckrost (2) als Steg- , Guß-, oder Maschenrost ausgebildet ist.

9. Entwässerungsrinne nach Anspruch 8,
**dadurch gekennzeichnet,** daß
der Stegrost jeweils Doppelfalzflächen (20) zur Auflage auf die Oberkante (21) der Seitenwände (3) des Rinnenkörpers (1) aufweist, wobei der Falz jeweils in den zur Innnenseite des Rinnenkörpers (1) hin gerichteten Arretierungsbügel (4) übergeht, der an seinem jeweils unteren Ende den einwärts abgewinkelten Schenkel (5) aufweist.

10. Entwässerungsrinne nach Anspruch 8,
**dadurch gekennzeichnet,**
daß, im Falle der Verwendung eines Gußrostes als Abdeckrost (2), der Gußrost angeformte Arretierungsbügel (4) mit nach innen abgewinkelten Schenkeln zum Zusammenwirken mit den Verriegelungsfedern (10) aufweist (Fig 2).

11. Entwässerungsrinne nach Anspruch 8,
**dadurch gekennzeichnet,**
daß, im Falle der Verwendung eines Maschenrostes als Abdeckrost (2), der Maschenrost einen Rostrahmen aufweist, wobei ein Teil des Rostrahmens so geformt ist, daß Arretierungsbügel (4) mit abgewinkelten, nach innen gerichteten Schenkeln zum Zusammenwirken mit den Verriegelungsfedern (10) ausgebildet sind.

## Claims

1. A drainage channel, having a channel body (1) of substantially U-shaped profile, a cover grating (2) which is securable to the channel body (1) and has locking clips (4) which project into the channel body (1) and have inwardly-bent arms (5), and having cut-outs (6) arranged substantially opposite one another in the lateral walls (3) of the channel body (1), characterised by
- a cover grating locking spring (10) which is plate-shaped, engages into the cut-outs (6) in the lateral walls (3) of the channel body (1) by means of facing projections (11) and assumes a substantially tension-free position after engagement or locking, the cover grating locking spring (10) comprising at least two mirror-symmetrical spring legs (12) which are directed towards the inner side of the channel body (1) and towards the locking clips (4) and each have an undercut (13) and a run-in slope (14);
- the locking clips (4) which are preferably integrally formed on the cover grating (2),
- and in that upon insertion of the cover grating (2) into the channel body (1), the inwardly-bent arms (5) slide along the run-in slope (14) of the cover grating locking spring (10) with the spring force of the spring legs (12) of the cover grating locking spring (10) being overcome and lock into the respective undercut (13) with relaxation of the spring legs (12).

2. A drainage channel in accordance with Claim 1, characterised in that a connecting region (15) provided between the projections (11) of the plate-shaped cover grating locking spring (10) is at least partially reduced in width and/or has a stamped longitudinal bead (16).

3. A drainage channel in accordance with Claim 2 characterised in that to form facing stop faces relative to the lateral walls (3) of the channel body (1), the connecting region (15) has bent portions (18) which are directed towards the channel base and issue from the respective projections (11).

4. A drainage channel in accordance with any one of Claims 1 to 3, characterised in that the cut-outs (6) located in the lateral walls (3) of the channel body (1) pass all the way through and widen conically to the exterior.

5. A drainage channel in accordance with any one of Claims 1 to 4, characterised in that a carrying and mounting aid is produced by plate-shaped cover grating locking springs (10) inserted into the channel body (1).

6. A drainage channel in accordance with any one of Claims 1 to 4, characterised in that through the exertion of pressure substantially from above on the spring legs (12) of the cover grating locking device (10), the bent arm-part (5) of the locking clip (4) in question issues from the undercut (13) and in this manner the cover grating (2) is removable upwards and/or in that the cover grating (2) is removable upwards through the exertion of traction thereon by means of a grating hook.

7. A drainage channel in accordance with any one of the preceding Claims, characterised in that the cover grating locking spring (10) is in one piece and is composed of a rustproof spring-steel material having sufficient rolling and bending strength.

8. Drainage channels in accordance with any one of the preceding Claims, characterised in that the cover grating (2) is a bar grating, cast grating or mesh grating.

9. A drainage channel in accordance with Claim 8, characterised in that in each case the bar grating has double-fold surfaces (20) for support on the upper edge (21) of the lateral walls (3) of the channel body (1), the fold in each case becoming the locking clip (4) which is directed towards the inner side of the channel body (1) and has the inwardly-bent arm (5) at its lower end.

10. A drainage channel in accordance with Claim 8, characterised in that in the event of a cast grating being used as cover grating (2), the cast grating has locking clips (4) formed thereon with inwardly-bent arms to co-operate with the locking springs (10) (Fig. 2).

11. A drainage channel in accordance with Claim 8, characterised in that in the event of a mesh grating being used as cover grating (2), the mesh grating has a grating frame, one part of the grating frame being formed in such a manner that locking clips (4) have bent, inwardly-directed arms to co-operate with the locking springs (10).

## Revendications

1. Caniveau d'écoulement comprenant un corps de caniveau (1) ayant un profilé sensiblement en forme de U, une grille de recouvrement (2) susceptible d'être fixée au corps de caniveau (1) par des brides d'arrêt (4) pénétrant dans le corps de caniveau (1) et présentant des bras latéraux (5) repliés vers l'intérieur, ainsi que des évidements (6) disposés sensiblement en vis-à-vis dans les parois latérales (3) du corps de caniveau (1),
- caractérisé par un ressort (10) de verrouillage de la grille de recouvrement en forme de lame qui s'enclenche par des saillies (11) disposées l'une en face de l'autre dans les évidements (6) des parois latérales (3) du corps de caniveau (1), et qui, après cet enclenchement ou fixation, prend une position sensiblement exempte de contrainte, le ressort de verrouillage de la grille de recouvrement (10) comprenant au moins deux branches de ressort (12) réalisées selon une symétrie miroir et dirigées vers le côté intérieur du corps de caniveau (1) et vers les brides d'arrêt (4), et présentant chacune une contre-dépouille (13) et une déclivité d'entrée (14) ;
- en ce que les brides d'arrêt (4) sont de préférence formées de manière intégrante à la grille de recouvrement ;
- et en ce que, lorsqu'on loge la grille de recouvrement (2) dans le corps de caniveau (1), les bras latéraux (5) repliés vers l'intérieur glissent le long des déclivités d'entrée (14) en surmontant l'effet de ressort des branches (12) du ressort de verrouillage de la grille de recouvrement (10) et s'enclenchent dans chaque contre-dépouille (13) lorsque les branches de ressort (12) se détendent.

2. Caniveau d'écoulement selon la revendication 1, caractérisé en ce qu'une zone de liaison (15) prévue entre les saillies (11) du ressort de verrouillage de la grille de recouvrement (10) est réduite au moins partiellement dans sa largeur et/ou présente un sertissage longitudinal (16) estampé.

3. Caniveau d'écoulement selon la revendication 2, caractérisé en ce que la zone de liaison (15) présente de part et d'autre une section (18) pliée dirigée vers le fond du caniveau pour former des surfaces d'appui situées en vis-à-vis contre les parois latérales (3) du corps de caniveau (1) en partant des saillies (11).

4. Caniveau d'écoulement selon les revendications 1 à 3, caractérisé en ce que les évidements (6) situés dans les parois latérales (3) du corps de caniveau (1) traversent celles-ci et sont élargies en forme de cône vers l'extérieur.

5. Caniveau d'écoulement selon l'une des revendications 1 à 4, caractérisé en ce que l'on prévoit une aide à la suspension et au montage aux ressorts de verrouillage en forme de lame de la grille de recouvrement (10) insérés dans le corps de caniveau (1).

6. Caniveau d'écoulement selon l'une des revendications 1 à 4, caractérisé en ce que, au moyen d'une pression exercée sur les branches de ressort (12) du ressort de verrouillage de la grille de recouvrement (10), les bras latéraux repliés (5) de chaque bride d'arrêt (4) se désengagent de la contre-dépouille (13) sensiblement par le haut ; et/ou au moyen de l'application à l'aide d'un crochet de grille d'une force de traction sur la grille de recouvrement (2), cette grille (2) est susceptible d'être enlevée vers le haut.

7. Caniveau d'écoulement selon l'une des revendications de brevet précédentes, caractérisé en ce que le ressort de verrouillage de la grille de recouvrement (10) est constitué d'une seule pièce et d'un matériau d'acier à ressort inoxydable d'une résistance à la flexion et au laminage suffisant.

8. Caniveau d'écoulement selon l'une des revendications précédentes, caractérisé en ce que la grille de recouvrement (2) est réalisée comme une grille d'entretoises, de fonte ou de mailles.

9. Caniveau d'écoulement selon la revendication 8, caractérisé en ce que la grille d'entretoises présente respectivement des surfaces de repliement doubles (20) pour son positionnement sur le bord supérieur (21) des parois latérales (3) du corps de caniveau (1), le pli passant chaque fois par-dessus la bride d'arrêt (4) tournée vers le côté intérieur du corps du caniveau (1) et munie en son extrémité inférieure d'un bras latéral (5) replié vers l'intérieur.

10. Caniveau d'écoulement selon la revendication 8, caractérisé en ce que, dans le cas de l'utilisation d'une grille de fonte comme grille de recouvrement (2), la grille de fonte présente des brides d'arrêt (4) de forme adaptée avec des bras latéraux présentant un angle tourné vers l'intérieur afin de pouvoir interagir avec les ressorts de verrouillage (10) (fig. 2).

11. Caniveau d'écoulement selon la revendication 8, caractérisé en ce que, dans le cas de l'utilisation d'une grille de mailles comme grille de recouvrement (2), la grille de mailles présente un cadre de grille, une partie du cadre de grille étant façonnée de façon à ce que des brides d'arrêt (4) sont réalisées avec des bras latéraux tournés vers l'intérieur afin qu'ils puissent interagir avec les ressorts de verrouillage (10).
